# EUROPÄISCHE PATENTANMELDUNG

(11) **EP 3 767 526 A1**
(43) Veröffentlichungstag der Anmeldung: **20.01.2021**
(21) Anmeldenummer: 20185400.7
(22) Anmeldetag: 13.07.2020
(51) Int. Cl.: G06K 9/00, G01N 27/00

(54) **VERFAHREN UND VORRICHTUNG ZUM ANALYSIEREN EINER PROBE**

(30) Priorität: 18.07.2019 DE 102019210581
(71) Anmelder: Robert Bosch GmbH, 70442 Stuttgart (DE)
(72) Erfinder: Haemmerle, Fabian, 70199 Stuttgart (DE)

(57) **Zusammenfassung**

Die vorliegende Erfindung schafft ein Verfahren zum Analysieren einer Probe (1) umfassend ein Vermessen (S1) der Probe (1) mit zumindest einer Metallsensoreinrichtung (2) über zumindest eine erste Oberfläche (F1) der Probe (1), wobei zumindest ein charakteristischer Parameter eines Metalls (M1; M2; ...; Mn) in der Probe (1) entlang zumindest einer Richtung (x; y) ermittelt wird; ein Ermitteln (S2) eines charakteristischen Musters (CM1; CM2; ...; CMn) des Metalls (M1; M2; ...; Mn) aus einem Verlauf des charakteristischen Parameters über die erste Oberfläche (F1) und Vergleichen (S3) des charakteristischen Musters (CM1; CM2; ...; CMn) mit zumindest einem bekannten Muster durch eine Auswerteeinrichtung (AE), wobei das bekannte Muster aus einer Speichereinrichtung (SP) abgerufen wird; ein Erkennen (S4) einer übereinstimmung des charakteristischen Musters (CM1; CM2; ...; CMn) mit dem bekannten Muster durch die Auswerteeinrichtung (AE); und ein Identifizieren (S5) der Probe und/oder des Metalls basierend auf der übereinstimmung durch die Auswerteeinrichtung (AE).

## Beschreibung

Die vorliegende Erfindung betrifft ein Verfahren zum Analysieren einer Probe und eine Vorrichtung zum Analysieren einer Probe.

### Stand der Technik

Verfahren zur Produktidentifizierung oder zur Bestimmung des Produkttyps eignen sich beispielsweise für eine Kreislaufwirtschaft zur gezielten Sortierung, Demontage und/oder Wiederaufbereitung oder zur Kontrolle der Echtheit des Produktes.

Eine manuelle Identifizierung kann auf eine sensorische Unterstützung zurückgreifen, wobei etwa Größe und Gewicht ermittelt werden können. Bei der manuellen Identifizierung werden meist aufgedruckte oder bereits vorhandene oder bekannte Identifizierungsmerkmale, Typenschilder oder Referenzbilder verwendet. Eine derartige manuelle Identifizierung kann eine vergleichsweise längere Zeitdauer benötigen als automatisierte Verfahren. Derartige automatisierte visuelle Verfahren nutzen üblicherweise Referenzbilder.

Bekannte Bildverarbeitungsverfahren können vollständig automatisierte Verfahren zum Identifizieren ermöglichen.

In der DE 10 2009 047 797 A1 wird ein Verfahren zur Objektidentifikation beschrieben. Bei dem Verfahren wird eine Kamera zur Generierung von Bild- und Videodaten benutzt.

### Offenbarung der Erfindung

Die vorliegende Erfindung schafft ein Verfahren zum Analysieren einer Probe nach Anspruch 1 und eine Vorrichtung zum Analysieren einer Probe nach Anspruch 10.

Bevorzugte Weiterbildungen sind Gegenstand der Unteransprüche.

### Vorteile der Erfindung

Die der vorliegenden Erfindung zugrunde liegende Idee besteht darin, ein Verfahren zum Analysieren einer Probe sowie eine entsprechende Vorrichtung anzugeben, bei welchen eine verbesserte Identifizierung der Probe als ein bestimmtes Produkt und ein Erkennen von Bestandteilen, insbesondere von bestimmten Metallen, sowie von deren Menge und Ausdehnung in der Probe ermöglicht wird. Durch ein Erkennen bestimmter Metalle kann hierbei das Produkt klassifiziert werden.

Erfindungsgemäß erfolgt bei dem Verfahren zum Analysieren einer Probe ein Vermessen der Probe mit zumindest einer Metallsensoreinrichtung über zumindest eine erste Oberfläche der Probe, wobei zumindest ein charakteristischer Parameter eines Metalls in der Probe entlang zumindest einer Richtung ermittelt wird; ein Ermitteln eines charakteristischen Musters des Metalls aus einem Verlauf des charakteristischen Parameters über die erste Oberfläche und ein Vergleichen des charakteristischen Musters mit zumindest einem bekannten Muster durch eine Auswerteeinrichtung, wobei das bekannte Muster aus einer Speichereinrichtung abgerufen wird; ein Erkennen einer übereinstimmung des charakteristischen Musters mit dem bekannten Muster durch die Auswerteeinrichtung; und ein Identifizieren der Probe und/oder des Metalls basierend auf der Übereinstimmung durch die Auswerteeinrichtung.

Durch das Verfahren kann eine Produktidentifizierung und/oder eine Bestimmung des Produkttyps erfolgen, insbesondere durch die Möglichkeit das Vorhandensein bestimmter Metalle in dem Produkt sowie vorteilhaft auch deren Menge und Lage in diesem Produkt zu bestimmen. Gegenüber bekannten visuellen Verfahren kann eine Geschwindigkeit des Verfahrens verbessert werden, da etwa keine zeitaufwändigen visuellen Referenzbilder erstellt werden müssen, und eine Erkennungsquote gesteigert werden, da diese von einer Verschmutzung und/oder Verdeckung der relevanten Merkmale nicht oder nur geringfügig beeinträchtigt werden kann. Die Probe kann ein bereitgestelltes Produkt umfassen oder als Teil eines Produkts aus diesem entnommen werden. Für den Fall, dass das Produkt bereits bekannt ist, kann auch gezielt dessen Echtheit mit der Vorrichtung geprüft werden. Dazu kann genau ein Datensatz über das eine Material oder die in dem Produkt vorhandenen Materialien (Metalle) aus der Speichereinrichtung abgerufen werden und mit den ermittelten charakteristischen Mustern verglichen werden, etwa auch deren Ort und Ausdehnung oder Tiefe im Produkt (etwa durch eine Signalstärke zu ermitteln). Falls die charakteristischen Muster mit den erwarteten Muster(n) in allen zu analysierenden Punkten (etwa die Position, die Ausdehnung oder den Typ) übereinstimmen, handelt es sich um genau das echte Produkt, andernfalls kann es sich um eine Fälschung oder Nachahmung handeln.

Auf Grundlage eines charakteristischen Musters des verbauten Metalls, welches von der Metallsensoreinrichtung ermittelt wird, können nach dem Vergleich des charakteristischen Musters mit bekannten Mustern vorteilhaft Aussagen über das Vorhandensein eines speziellen Metalls in der Probe sowie über dessen Position, Ausdehnung und/oder Tiefe getroffen werden. Hierbei sind die für entsprechende Metalle deren Muster bekannt und der Auswerteeinrichtung für einen Vergleich zugänglich. Der charakteristische Parameter kann dabei eine Magnetflussdichte, eine Magnetisierbarkeit des Metalls, ein Abschirmungsverhalten, eine Materialdichte oder ähnliches sein. Ein Verlauf des charakteristischen Parameters oder mehrerer Parameter eines Metalls über die von der Metallsensoreinrichtung abgefahrenen Fläche oder Strecke kann dann das charakteristische Muster bilden.

Die Probe kann eine Probe, etwa ein Teilstück eines Produktes oder ein ganzes Produkt aus einer Produktion sein. Aus somit erhaltener Kenntnis über die verbauten Metalle und vorteilhaft auch deren Ausdehnung, Position oder Tiefe kann ein Produkt einem Hersteller und/oder einem Produkttyp zugeordnet werden, mit anderen Worten als ein bestimmtes Produkt identifiziert werden. Es kann hierbei ein Vergleich erfolgen, ob das vermessene Produkt (Probe) einem vorgegebenen Musterprodukt einer Produktion entspricht.

Das Verfahren kann vorteilhaft automatisiert ablaufen, und schneller sein als manuelle Verfahren.

Gemäß einer bevorzugten Ausführungsform des Verfahrens wird zumindest eine zweite Oberfläche der Probe vermessen.

Gemäß einer bevorzugten Ausführungsform des Verfahrens umfasst die Metallsensoreinrichtung zumindest einen Metalldetektor umfasst und/oder wendet diesen an, welcher als ein Messsignal ein Spannungssignal erzeugt und wobei das charakteristische Muster das Spannungssignal im Zeitverlauf und/oder in einem räumlichen Verlauf über die Probe aufweist.

Gemäß einer bevorzugten Ausführungsform des Verfahrens umfasst die Metallsensoreinrichtung zumindest ein Magnetometer und/oder wendet dieses an, welches ein Messsignal für eine Magnetflussdichte am Magnetometer erzeugt und wobei das charakteristische Muster das Messsignal in einem räumlichen und/oder zeitlichen Verlauf über die Probe aufweist.

Gemäß einer bevorzugten Ausführungsform des Verfahrens wird eine Stärke des Messsignals ermittelt, und dadurch auf eine Menge des Metalls in der Probe und/oder auf eine Tiefenposition des Metalls in der Probe rückgeschlossen.

Die Messsignale des Metalldetektors und/oder des Magnetometers können unabhängig sein von einer Verschmutzung der Probe und deren visueller Merkmale und auch unabhängig sein von einer optischen Verdeckung der Merkmale oder Materialien. Ein solches erfindungsgemäßes Verfahren kann dadurch zuverlässiger sein als rein visuelle Verfahren oder Verfahren die Marker nutzen (elektronische oder visuelle Marker wie RFIDs oder Etiketten), deren Marker jedoch verstellt, bedeckt oder beschädigt sein können. Weiterhin können durch das erfindungsgemäße Verfahren auch Altgeräte nachträglich analysiert und Materialien in diesem nachgewiesen werden und die Altgeräte so identifiziert werden.

Das verbaute Metall kann beim Abfahren der ersten Oberfläche in zumindest einer Richtung das charakteristische Muster im Messsignal der Metallsensoreinrichtung erzeugen. Das Messsignal kann dabei auf eine bestimmte vom Sensor messbare Größe, insbesondere des charakteristischen Parameters, reagieren, vorteilhaft auf deren räumlicher und/oder zeitlicher Variation, wobei auch die Intensität (Stärke) dieser gemessenen Größe (des charakteristischen Parameters) ermittelbar sein kann.

Gemäß einer bevorzugten Ausführungsform des Verfahrens wird der zumindest eine charakteristische Parameter entlang zumindest einer weiteren Richtung ermittelt.

Gemäß einer bevorzugten Ausführungsform des Verfahrens wird zumindest eine Vergleichsprobe mit der Metallsensoreinrichtung vermessen und ein Verlauf zumindest eines charakteristischen Parameters über die erste Oberfläche für die Vergleichsprobe in der Speichereinrichtung als ein bekanntes Muster gespeichert.

Gemäß einer bevorzugten Ausführungsform des Verfahrens wird zusätzlich ein RFID-Sender der Probe ausgelesen und die Probe damit identifiziert, oder es zusätzlich eine visuelle Identifizierung oder eine manuelle Prüfung der Probe.

In automatischen Verfahren können elektronische Marker zur Identifizierung verwendet werde, beispielsweise können RFIDs (radio-frequency identification, Identifizierung mit Hilfe elektromagnetischer Wellen) vollständig automatisch korrekt und schnell ausgelesen werden und Informationen (Grundinformationen) über eine Probe bereitstellen. Ein Auslesen von RFIDs kann unterstützend zu den Messsignalen der Metallsensoreinrichtung erfolgen.

Gemäß einer bevorzugten Ausführungsform des Verfahrens erfolgt ein Prüfen auf Echtheit der Probe, indem die Probe danach vermessen wird, ob die Probe einem oder mehreren vorbestimmten der bekannten Muster entspricht.

Für eine Echtheitsprüfung kann genau ein oder mehrere bekannte Muster aufgerufen werden, etwa aus einer Speichereinrichtung, welches oder welche alle in der zu prüfenden Probe mit den bekannten Muster(n) identisch sein müssen, wenn die Probe echt sein soll. Dieses oder diese bekannten Muster können dann als vorbestimmte bekannte Muster bezeichnet werden.

Erfindungsgemäß umfasst die Vorrichtung zum Analysieren einer Probe zumindest eine Metallsensoreinrichtung, welche dazu eingerichtet ist, die Probe über zumindest eine erste Oberfläche der Probe zu vermessen, wobei zumindest ein charakteristischer Parameter eines Metalls in der Probe entlang zumindest einer Richtung ermittelbar ist; eine Speichereinrichtung; eine Auswerteeinrichtung, welche dazu eingerichtet ist, ein charakteristisches Muster des Metalls aus einem Verlauf des charakteristischen Parameters über die erste Oberfläche zu ermitteln und das charakteristische Muster mit zumindest einem bekannten Muster zu vergleichen, wobei das bekannte Muster aus einer Speichereinrichtung abrufbar ist, eine übereinstimmung des charakteristischen Musters mit dem bekannten Muster zu erkennen, und die Probe und/oder das Metall basierend auf der Übereinstimmung zu identifizieren.

Gemäß einer bevorzugten Ausführungsform der Vorrichtung umfasst die Metallsensoreinrichtung zumindest einen Metalldetektor und/oder zumindest ein Magnetometer.

Erfindungsgemäß umfasst ein Mobiltelefon eine erfindungsgemäße Vorrichtung zum Analysieren einer Probe.

Das Verfahren kann sich auch durch die in Verbindung mit der Vorrichtung zum Analysieren einer Probe genannten Merkmale und deren Vorteile auszeichnen und umgekehrt. Insbesondere ist die Vorrichtung zum Analysieren einer Probe eingerichtet, das beschriebene Verfahren zum Analysieren einer Probe durchzuführen.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand des in den schematischen Figuren der Zeichnung angegebenen Ausführungsbeispiels näher erläutert.

Es zeigen:
- Fig. 1: eine Vorrichtung zum Analysieren einer Probe gemäß einem Ausführungsbeispiel der vorliegenden Erfindung;
- Fig. 2a: ein bekanntes Muster für einen charakteristischen Parameter eines Metalls;
- Fig. 2b: ein charakteristisches Muster für einen charakteristischen Parameter eines Metalls; und
- Fig. 3: eine Blockdarstellung von Verfahrensschritten eines Verfahrens zum Analysieren einer Probe gemäß einem Ausführungsbeispiel der vorliegenden Erfindung.

In den Figuren bezeichnen gleiche Bezugszeichen gleiche bzw. funktionsgleiche Elemente.

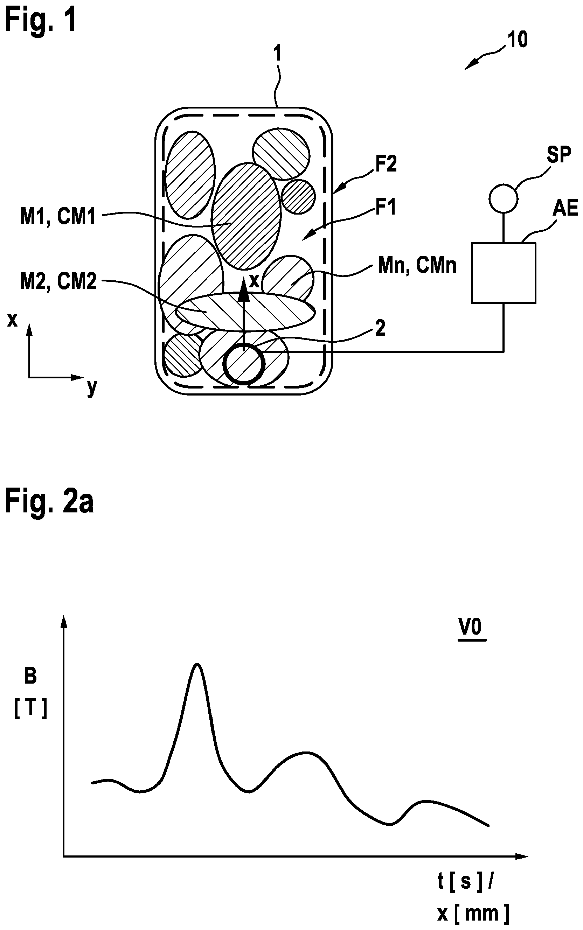

Fig. 1 zeigt eine Vorrichtung zum Analysieren einer Probe gemäß einem Ausführungsbeispiel der vorliegenden Erfindung.

Die Vorrichtung 10 zum Analysieren einer Probe 1 umfasst zumindest eine Metallsensoreinrichtung 2, welche dazu eingerichtet ist, die Probe 1 über zumindest eine erste Oberfläche F1 der Probe 1 zu vermessen, wobei zumindest ein charakteristischer Parameter eines Metalls (M1; M2; ...; Mn) in der Probe 1 entlang zumindest einer Richtung (x; y) ermittelbar ist. Des Weiteren umfasst die Vorrichtung 10 eine Speichereinrichtung SP; eine Auswerteeinrichtung AE, welche dazu eingerichtet ist, ein charakteristisches Muster (CM1; CM2; ...; CMn) des Metalls (M1; M2; ...; Mn) aus einem Verlauf des charakteristischen Parameters über die erste Oberfläche F1 zu ermitteln und das charakteristische Muster (CM1; CM2; ...; CMn) mit zumindest einem bekannten Muster zu vergleichen, wobei das bekannte Muster aus der Speichereinrichtung SP abrufbar ist, eine übereinstimmung des charakteristischen Musters (CM1; CM2; ...; CMn) mit dem bekannten Muster zu erkennen, und die Probe und/oder das Metall basierend auf der Übereinstimmung zu identifizieren.

Bei der Probe 1 kann es sich beispielsweise um ein Mobiltelefon handeln. Aus der Speichereinrichtung SP können vorteilhaft mehrere bekannte Muster, oder alle in der Speichereinrichtung SP gespeicherten, abgerufen werden und mit den charakteristischen Mustern verglichen werden. Durch ein Übereinstimmen eines charakteristischen Musters mit einem der bekannten Muster kann das entsprechende Metall und damit auch die Probe identifiziert werden. Auf diese Weise kann ein vor der Vermessung unbekanntes Produkt genau identifiziert werden.

Für den Fall, dass das Produkt bereits bekannt ist, kann auch gezielt dessen Echtheit mit der Vorrichtung 10 geprüft werden. Dazu kann genau ein Datensatz über das eine oder die in dem Produkt vorhandenen Materialien (Metalle) aus der Speichereinrichtung SP abgerufen werden und mit den ermittelten charakteristischen Mustern verglichen werden, etwa auch deren Ort und Ausdehnung oder Tiefe im Produkt (etwa durch eine Signalstärke zu ermitteln). Falls die charakteristischen Muster mit den erwarteten Muster(n) in allen Punkten (Position, Ausdehnung, Typ) übereinstimmen, handelt es sich um genau das echte Produkt, andernfalls kann es sich um eine Fälschung oder Nachahmung handeln. In diesem Fall kann die Vorrichtung 10 zum Erkennen von Produktpiraterie genutzt werden.

Die übereinstimmung kann auch noch unter einer vorbestimmten Toleranz gegeben sein.

Es ist weiterhin möglich, dass zumindest eine zweite Oberfläche F2 der Probe 1 vermessen wird, wobei die Metallsensoreinrichtung 2 über die zweite Oberfläche F2 und dort entlang zumindest einer oder mehreren Richtungen bewegt werden kann.

Die Metallsensoreinrichtung 2 kann zumindest einen Metalldetektor umfassen und/oder anwenden, welcher als ein Messsignal ein Spannungssignal erzeugen kann und wobei das charakteristische Muster (CM1; CM2; ...; CMn) das Spannungssignal im Zeitverlauf und in einem räumlichen Verlauf über die Probe 1 erzeugen kann. Der Metalldetektor kann beispielsweise eine Sende- und Empfangsspule umfassen und in der Empfangsspule eine Magnetfeldvariation durch eine dort induzierte Spannung erkennen, welche abhängig sein kann von der Ausdehnung des von der Metallsensoreinrichtung 2 überstrichenen Bereichs. Auf diese Weise kann die räumliche Ausdehnung des detektierten Metalls ermittelt werden, vorteilhaft in zwei Dimensionen über zumindest die erste Oberfläche.

Die Metallsensoreinrichtung kann zumindest ein Magnetometer umfassen und/oder anwenden, welches ein Messsignal für eine Magnetflussdichte am Magnetometer erzeugen kann und wobei das charakteristische Muster (CM1; CM2; ...; CMn) das Messsignal einen räumlichen Verlauf über die Probe 1 aufweisen kann. Auf diese Weise kann auch mit beiden Sensortypen zusammen ein erstes charakteristisches Muster CM1 für ein erstes Metall M1, ein zweites charakteristisches Muster CM2 für ein zweites Metall M2 und ebenso für weitere Metalle in der Probe 1 erzeugt werden. Das charakteristische Muster kann dabei Informationen aus einem oder beiden Metallsensoreinrichtung umfassen. Auf diese Weise kann der Typ der verbauten Metalle ermittelt werden, wenn das charakteristische Muster mit einem bekannten Muster verglichen wird.

Des Weiteren kann eine Stärke des Messsignals ermittelt werden, und dadurch auf eine Menge des Metalls (M1; M2; ...; Mn) in der Probe 1 und/oder auf eine Tiefenposition des Metalls (M1; M2; ...; Mn) in der Probe rückgeschlossen werden. Die Tiefenposition kann sich auf eine Tiefe in der Probe relativ zur Metallsensoreinrichtung beziehen. Die Metallsensoreinrichtung 2 kann vorteilhaft direkt an die Probe 1 anliegend über diese bewegt werden oder um eine bestimmte Distanz von der Oberfläche der Probe beabstandet über dieser. Unterschiedliche Metalle können unterschiedliche Muster, insbesondere jene von einem Metalldetektor, erzeugen, beispielsweise können Kupfer, Nickel, Gold oder weitere Metalle detektiert werden.

Des Weiteren kann durch das Magnetometer auch die magnetische Eigenschaft des Metalls erkannt werden, beispielsweise ob dieses selbst magnetisch oder abschirmend ist.

Das eine oder die mehreren charakteristische Muster können beispielsweise über eine oder über alle Außenfläche der Probe 1 ermittelt werden, wodurch ein dreidimensionales Bild der verbauten Metalle erzeugt werden kann. Von einem Metall können hinsichtlich mehrerer zu ermittelnder charakteristischen Parameter auch mehrere charakteristische Muster erstellt werden.

Durch bauliche Eigenschaften eines Produkts kann ein eindeutiges Muster erzeugbar sein, wobei eine Zuordnung zu einem Produkttyp, oder einer Produktversion eines Herstellers möglich sein kann.

Durch unterschiedliche Metalle und deren Menge kann eine deutliche Zusammensetzung der Probe ermittelt werden, sich ein deutliches Gesamtmuster ergeben und bekannte Produkte identifiziert werden.

Durch das Ermitteln und Vergleichen eines charakteristischen Musters kann eine eindeutige Identifikation der Metalle und eines Produktes erfolgen, welche manuell oder automatisch erfolgen kann. Im automatisierten Fall kann diese verhältnismäßig schnell erfolgen, eine vollständige Automatisierung ist möglich, wobei die Metallsensoreinrichtung automatisch zumindest die erste Oberfläche abfahren kann. Das Verfahren ist vorteilhaft robust gegen Verschmutzung oder Zerstörung des Produkts und ist vorteilhaft nachrüstbar, kann also auch noch Jahre nach dem Verkauf des Produkts erfolgen, wobei etwa alte Geräte auch noch auf deren Bestandteile identifiziert und klassifiziert werden können.

So können etwa alte Geräte, welche sich schon beim Kunden befinden analysiert werden, ohne dass das Anbringen eines Markers, etwa eines RFIDs, nötig ist. Hierzu kann ein altes Gerät vermessen werden und das Muster in die Speichereinrichtung übertragen werden.

Fig. 2a zeigt ein bekanntes Muster für einen charakteristischen Parameter eines Metalls.

Zum Identifizieren eines Produkts mit bestimmten Metallen in bestimmter Position, Größe und/oder bestimmten metallischen und/oder magnetischen Eigenschaften kann zumindest eine Vergleichsprobe VO mit der Metallsensoreinrichtung vermessen werden und ein Verlauf zumindest eines charakteristischen Parameters über die erste Oberfläche für die Vergleichsprobe VO in der Speichereinrichtung als ein bekanntes Muster gespeichert werden. Mit anderen Worten kann ein bekanntes Muster für Vergleichszwecke initial erfasst, vermessen und gespeichert werden.

Die Fig. 2a zeigt eine reale Messung einer Magnetflussdichte am Magnetometer, vorteilhaft deren Betrag in Tesla, entlang einer Richtung x in mm oder als Variation über die Zeit t in s. Beim Bewegen der Metallsensoreinrichtung über die erste Fläche kann sich auch eine zeitliche Variation der Magnetflussdichte an der Sensoreinrichtung ergeben, wenn die Sensoreinrichtung aus dem räumlichen Bereich über dem Metall hinausbewegt oder hineinbewegt wird.

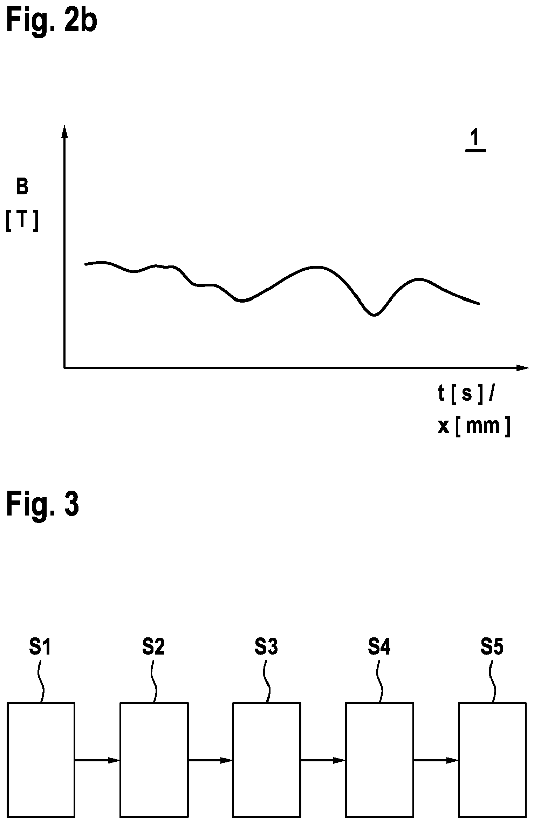

Fig. 2b zeigt ein charakteristisches Muster für einen charakteristischen Parameter eines Metalls.

In der Fig. 2b wird eine reale Messung einer Magnetflussdichte am Magnetometer, vorteilhaft deren Betrag in Tesla, entlang einer Richtung x in mm oder als Variation über die Zeit t in s, ähnlich der Fig. 2a, gezeigt. Dabei ist anzumerken, dass in der Fig. 2b eine andere Probe vermessen wurde, jedoch entlang der gleichen Richtung, vorteilhaft auch entlang der gleichen Positionen der Metallsensoreinrichtung in einer Ebene auf der ersten Oberfläche. Würde die Probe, also das zu identifizierende Produkt, jenem aus der Fig. 2a entsprechen, müsste eine Bewegung der gleichen Metallsensoreinrichtung (oder zumindest gleicher Sensorarten) entlang gleicher Positionen ein gleiches charakteristisches Muster in beiden Figuren ergeben. Die Magnetflussdichte B der Fig. 2b unterscheidet sich allerdings deutlich von jener der Fig. 2a. Daher handelt es sich bei der Probe zur Fig. 2b nicht um das gleiche Produkt wie in der Fig. 2a. Es ist alternativ auch möglich, dass anstatt entlang gleicher Positionen die Metallsensoreinrichtung entlang ähnlicher Positionen bewegt wird. Diese ähnlichen Positionen können eine gleiche Aussagekraft zur Identifizierung des Produkts haben, sofern die erste Oberfläche, und vorteilhaft auch weitere Oberflächen, ausreichen abgefahren werden um die vorhandenen Metalle betreffend Lage, Tiefe und/oder deren Ausdehnung zu detektieren. Falls signifikante Abweichungen zwischen charakteristischen und bekannten Mustern feststellbar sind, kann von unterschiedlichen Produkttypen ausgegangen werden.

In der Fig. 2a zeigen unterschiedliche Flächen die unterschiedlichen Bereiche der vorhandenen und identifizierten Metalle. Die Bereiche können unterschiedliche Stärken der ermittelten Messsignale aufweisen, und sonst gleiche oder verschiedene charakteristische Muster (Verläufe) aufweisen.

Aus einem Vergleich der ermittelten Magnetflussdichten über die Zeit und/oder über den Ort, wie in den Figuren 2a und 2b dargestellt, kann erkannt werden, dass sich Produkte hinsichtlich deren charakteristischen Muster und somit deren vorhandener Metalle klar unterscheiden lassen können, was im Umkehrschluss eine eindeutige Zuordnung ergeben kann.

Fig. 3 zeigt eine Blockdarstellung von Verfahrensschritten eines Verfahrens zum Analysieren einer Probe gemäß einem Ausführungsbeispiel der vorliegenden Erfindung.

Bei dem Verfahren zum Analysieren einer Probe erfolgt ein Vermessen S1 der Probe mit zumindest einer Metallsensoreinrichtung über zumindest eine erste Oberfläche der Probe, wobei zumindest ein charakteristischer Parameter eines Metalls in der Probe entlang zumindest einer Richtung ermittelt wird; ein Ermitteln S2 eines charakteristischen Musters des Metalls aus einem Verlauf des charakteristischen Parameters über die erste Oberfläche und ein Vergleichen S3 des charakteristischen Musters mit zumindest einem bekannten Muster durch eine Auswerteeinrichtung, wobei das bekannte Muster aus einer Speichereinrichtung abgerufen wird; ein Erkennen S4 einer Übereinstimmung des charakteristischen Musters mit dem bekannten Muster durch die Auswerteeinrichtung; und ein Identifizieren S5 der Probe und/oder des Metalls basierend auf der Übereinstimmung durch die Auswerteeinrichtung.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Verfahren zum Analysieren einer Probe (1) umfassend die Schritte:
- Vermessen (S1) der Probe (1) mit zumindest einer Metallsensoreinrichtung (2) über zumindest eine erste Oberfläche (F1) der Probe (1), wobei zumindest ein charakteristischer Parameter eines Metalls (M1; M2; ...; Mn) in der Probe (1) entlang zumindest einer Richtung (x; y) ermittelt wird;
- Ermitteln (S2) eines charakteristischen Musters (CM1; CM2; ...; CMn) des Metalls (M1; M2; ...; Mn) aus einem Verlauf des charakteristischen Parameters über die erste Oberfläche (F1) und Vergleichen (S3) des charakteristischen Musters (CM1; CM2; ...; CMn) mit zumindest einem bekannten Muster durch eine Auswerteeinrichtung (AE), wobei das bekannte Muster aus einer Speichereinrichtung (SP) abgerufen wird;
- Erkennen (S4) einer übereinstimmung des charakteristischen Musters (CM1; CM2; ...; CMn) mit dem bekannten Muster durch die Auswerteeinrichtung (AE); und
- Identifizieren (S5) der Probe und/oder des Metalls basierend auf der übereinstimmung durch die Auswerteeinrichtung (AE).

2. Verfahren nach Anspruch 1, bei welchem zumindest eine zweite Oberfläche (F2) der Probe (1) vermessen wird.

3. Verfahren nach Anspruch 1 oder 2, bei welchem die Metallsensoreinrichtung zumindest einen Metalldetektor umfasst und/oder anwendet, welcher als ein Messsignal ein Spannungssignal erzeugt und wobei das charakteristische Muster (CM1; CM2; ...; CMn) das Spannungssignal im Zeitverlauf und/oder in einem räumlichen Verlauf über die Probe (1) aufweist.

4. Verfahren nach einem der Ansprüche 1 bis 3, bei welchem die Metallsensoreinrichtung zumindest ein Magnetometer umfasst und/oder anwendet, welches ein Messsignal für eine Magnetflussdichte am Magnetometer erzeugt und wobei das charakteristische Muster (CM1; CM2; ...; CMn) das Messsignal in einem räumlichen und/oder zeitlichen Verlauf über die Probe (1) aufweist.

5. Verfahren nach zumindest einem der Ansprüche 3 oder 4, bei welchem eine Stärke des Messsignals ermittelt wird, und dadurch auf eine Menge des Metalls (M1; M2; ...; Mn) in der Probe (1) und/oder auf eine Tiefenposition des Metalls (M1; M2; ...; Mn) in der Probe rückgeschlossen wird.

6. Verfahren nach einem der Ansprüche 1 bis 5, bei welchem der zumindest eine charakteristische Parameter entlang zumindest einer weiteren Richtung (x; y) ermittelt wird.

7. Verfahren nach einem der Ansprüche 1 bis 6, bei welchem zumindest eine Vergleichsprobe (VO) mit der Metallsensoreinrichtung (2) vermessen wird und ein Verlauf zumindest eines charakteristischen Parameters über die erste Oberfläche (F1) für die Vergleichsprobe (VO) in der Speichereinrichtung (SP) als ein bekanntes Muster gespeichert wird.

8. Verfahren nach einem der Ansprüche 1 bis 7, bei welchem zusätzlich ein RFID-Sender der Probe (1) ausgelesen wird und die Probe (1) damit identifiziert wird, oder zusätzlich eine visuelle Identifizierung oder eine manuelle Prüfung der Probe erfolgt.

9. Verfahren nach einem der Ansprüche 1 bis 8, bei welchem ein Prüfen auf Echtheit der Probe (1) erfolgt, indem die Probe (1) danach vermessen wird, ob die Probe (1) einem oder mehreren vorbestimmten der bekannten Muster entspricht.

10. Vorrichtung (10) zum Analysieren einer Probe (1) umfassend:
- zumindest eine Metallsensoreinrichtung (2), welche dazu eingerichtet ist, die Probe (1) über zumindest eine erste Oberfläche (F1) der Probe (1) zu vermessen, wobei zumindest ein charakteristischer Parameter eines Metalls (M1; M2; ...; Mn) in der Probe (1) entlang zumindest einer Richtung (x; y) ermittelbar ist;
- eine Speichereinrichtung (SP);
- eine Auswerteeinrichtung (AE), welche dazu eingerichtet ist, ein charakteristisches Muster (CM1; CM2; ...; CMn) des Metalls (M1; M2; ...; Mn) aus einem Verlauf des charakteristischen Parameters über die erste Oberfläche (F1) zu ermitteln und das charakteristische Muster (CM1; CM2; ...; CMn) mit zumindest einem bekannten Muster zu vergleichen, wobei das bekannte Muster aus der Speichereinrichtung (SP) abrufbar ist, eine übereinstimmung des charakteristischen Musters (CM1; CM2; ...; CMn) mit dem bekannten Muster zu erkennen, und die Probe und/oder das Metall basierend auf der übereinstimmung zu identifizieren.

11. Vorrichtung (10) nach Anspruch 10, bei welcher die Metallsensoreinrichtung zumindest einen Metalldetektor und/oder zumindest ein Magnetometer umfasst.

12. Mobiltelefon umfassend eine Vorrichtung nach Anspruch 10 oder 11.
